# EUROPEAN PATENT APPLICATION

(11) **EP 1 731 213 A1**
(43) Date of publication of application: **13.12.2006**
(21) Application number: 06011878.3
(22) Date of filing: 08.06.2006
(51) Int. Cl.: B01D 53/85, C02F 3/04

(54) **Device for purifying a flow of fluid and method for using it**

(30) Priority: 08.06.2005 NL 1029218; 14.10.2005 NL 1030203
(71) Applicant: Pure Air Solutions Holding B.V., 8331 TV Steenwijk (NL)
(72) Inventor: Waalkens, Albert, 8331 TV Steenwijk (NL); Schoonhoven, Andrè, 8331 TV Steenwijk (NL)
(74) Representative: Ferguson, Alexander

(57) **Abstract**

A device for purifying a flow of fluid, such as air or water, comprising a chamber having an inlet and an outlet for said fluid, wherein the chamber is intended for containing filter material comprising randomly stacked inert particles, such as ceramic or synthetic particles, having a surface suitable for the attachment of micro-organisms able to digest contaminants from the fluid, wherein said chamber has a cylindrical, preferably circle-cylindrical, upper part as well as a cone-shaped lower part contiguous thereto and particularly situated underneath it, in which lower part the inlet or outlet has been arranged.

## Description

The current invention relates to a device for purifying a fluid, such as air or water.

In the art, many such devices are known, which have a chamber for filter material. Such a chamber has inlets and outlets for the fluid to be purified. In the chamber, the filter material is randomly stacked and usually comprises inert synthetic or ceramic particles with large open pores and a large specific surface area intended for the attachment of micro-organisms. These micro-organisms are provided for digesting the contaminants from the medium.

Several of these device are disclosed in, for instance, DE-A1-41 04 380, EP-A1-1.238.697, US-A-5.409.834, DE-A1-101 57 321, DE-A1-37 09 269, US-A-5,985,649 and DE-A1-199 50 688.

Although these existing devices, some of which based on the bio trickling principle, achieve good purifying results, several difficulties still exist:
- High flow resistance (large pressure drop);
- Clogging of the filter material (by dust, biological growth etc.);
- Laborious process to empty the device of the filter material (e.g. for cleaning after clogging);
- Preferential flows of the fluid to be purified through the filter material;
- Limited height of the stacked filter material and therefore large footprint;
- Expensive for a large group of industries;

The difficulties mentioned cause biological treatment to have practical and/or mechanical and/or technical and/or commercial limitations concerning flow rates and/or substances and/or loads.

It is an object of the invention to improve on at least one of these points.

To that end, the invention from one aspect provides a device for purifying a flow of fluid, such as air or water, comprising a chamber having an inlet and an outlet for said fluid, wherein the chamber is intended for containing filter material comprising randomly stacked inert particles, such as ceramic or synthetic particles, having a surface suitable for the attachment of micro-organisms able to digest contaminants from the fluid, wherein said chamber has a cylindrical, preferably circle-cylindrical, upper part as well as a cone-shaped lower part contiguous thereto and particularly situated underneath it, in which lower part the inlet or outlet has been arranged.

This allows a proportional flow, often gaseous, particularly air, through the filter material, which will have large pores and a high specific surface area for the attachment of micro-organisms, and facilitates adapting the device to specific operational conditions. Furthermore, it allows a device which is affordable for specific groups of industries, for instance for farms. The cone ensures gradual distribution or joining of the flow paths.

In one embodiment, the inlet or outlet is provided in a lower part of the cone-shaped part, preferably in the tip. Especially in case of an inlet an even distribution of the fluid over the cross-section is achieved.

In a further embodiment, the device is provided with a grid for supporting or retaining said filter material, preferably disposed in the cone-shaped part, preferably in or near the tip.

Preferably the grid is removable, that means that the grid can be taken out of the passage, by turning it away, preferably by taking away the grid. In this way the filter material can easily be removed form the device, to be replaced. The cone shape enhances the outflow of filter material and therefore functions in two flow directions, in the one direction for the fluid and in the opposite direction for the filter material.

The way of designing, constructing and installing such a device, and in particular due to its cone-shape, with the required volume, in particular with an inlet/outlet at the bottom of the cone and an inlet/outlet in the top of the device, and with a chamber filled with a commercially available randomly stacked packing, whereby the fluid or medium to be purified travels proportionally through the chamber in a vertical flow, it is possible to improve known devices.

In one embodiment the device according to the invention, comprises a conduit (section) for the fluid, removably attached to the inlet or outlet, optionally with said grid. This further simplifies replacement of filter material.

In one embodiment the device according to the invention comprises a sprinkling means for delivering water onto the filter material in the chamber.

In one embodiment the device according to the invention, comprises at least one sensor for measuring the activity of the filter material, in particular at least one temperature sensor inside the chamber.

In one embodiment the device according to the invention, comprises a sensor for determining the flow rate of the water, in particular a flow meter.

In one embodiment the device according to the invention, comprises at least one sensor for determining the flow of fluid to be purified.

In one embodiment the device according to the invention, comprises a control means, operationally connected to the sensors, and the inlet for the fluid comprises means for influencing the flow of the fluid, said control means being functionally connected to the means for influencing, for controlling the flow of fluid.

In one embodiment the device according to the invention, in operation is positioned with its cylinder axis in vertical position, and the flow direction of the fluid substantially in the direction of the cylinder axis. Not only does this guarantee a correct flow, it particularly guarantees a proportional flow.

In one embodiment of the device the inlet for the fluid is located such that - when in operation - the fluid is guided from the bottom to the top through the device.

In one embodiment of the device according to the invention which comprises a sprinkling device for sprinkling water onto said filter material in the chamber, the inlet for the fluid and the sprinkling device are positioned such in said device and with regard to one another so as to allow the fluid and said sprinkle water to flow in counter flow. This facilitates the operation of the device, and simplifies control as well. Furthermore, the positioning of the chamber makes it possible to use the natural flow (speed) of the water and/or rather simple means for managing and controlling said flow suffice.

In one embodiment, the fluid to be purified enters at the bottom of the cone shaped device and it leaves the device at the top. Depending on the nature of the medium to be purified, said flow direction can also be reversed, entering at the top and leaving at the bottom.

In one embodiment of the invention, the filter material is a commercially available random loose stacking. To overcome the difficulty of preferential flows the cone shape enables, by its shape, the homogeneous distribution of the flow of the medium to be purified in the reactor. Depending on the medium to be purified, the filter material can also be stacked in layers of various particle sizes. In case of a flow direction from bottom to top, the flow is enhanced when the lower part (at least the cone) is filled with larger particle sizes than in the higher areas of the chamber.

Flows with high concentrations of VOCs (volatile organic compounds) often cause clogging of bio-reactors at high loading rates. Due to the cone shape and the random stacking, the filter material is in this case easily removed from the device or chamber by opening a valve at the bottom of the cone. The filter material can be cleaned and replaced in the device or chamber and so be used again. To enable easy (re)filling, the cone-shaped device, in which the filter material is received, can be provided with an external filling pipe. The advantage thereof is that the filter material can be transported by air into the device.

Depending on the medium to be purified and to achieve a sufficiently large capacity of the device, the device according to the invention can be executed in different widths and/or heights. Another possibility is that a number of devices according to the invention, every one of them containing filter material, are linked in series or are placed parallel.

In a certain embodiment, when the device is filled or refilled with the filter material biomass is added to the filter material to enable biochemical reaction to purify the air. The biomass can be provided as augmentation on the filter particles, and as an immobilised bio film disposed beforehand. The composition of the biomass will depend on the nature and the composition of the flow to be purified. During use, the activity and size of the biomass will increase; the optimum efficiency of the reactor therefore will not be achieved until after some time.

Besides the use of the invention as a biological trickling filter, it can also be used as a chemical scrubber, as in an alkaline (such as caustic soda) scrubber for removing acidic compounds (for example H₂S) or as acid scrubber for removing alkaline substances (for example NH₃) or as oxidising scrubber such as hypochloride.

The device according the invention can be used for purifying a medium containing compounds which, during or after purification, produce toxic elements, affecting the filter material and/or adversely affect the activity of the biomass. Water, sprinkled on the filter material from above, - i.e., usually, in a direction opposite to the direction of the flow to be purified ― dissolves the toxic elements which can subsequently be removed with surplus water. Sprinkling the filter material has more favourable effects: the pH-value of the re-cycled water can for instance be brought at the desired value in this way. It is also possible to add nutrients for enhancing the activity of the biomass. It is also possible to use a more phase fluid instead of water as sprinkling/re-cycle water; this to be able to purify the fluid of those compounds which are very difficult dissolve in water, like in NL1004968.

An embodiment of the invention can also be provided with measuring equipment and/or instruments for process control. In this way, the most essential ambient conditions for the micro-organisms can be monitored.

According to a further aspect of the invention, a device is provided for treatment of a fluid, in particular air, comprising a treatment chamber provided with a substantially cylindrical central part having a longitudinal axis, means for holding said chamber with the longitudinal axis of said cylindrical central part substantially upright (vertical), and having an inlet opening connecting to said chamber from below and within a circumscribing surface which is a continuation of the outer wall of said cylindrical central part.

In a prototype, the circumscribing surface is a physical wall.

In one embodiment of the device, the placement means have been disposed for creating a space between the lower part of the chamber and the (bottom) surface on which the device is installed.

In one embodiment, the device further comprises a conduit connected to the inlet, said conduit being removable so as to allow access to the inlet opening from the space.

In one embodiment of the device, the chamber is adapted for holding particle material, in particular particle-shaped filter material comprising randomly stacked inert particles, such as ceramic or synthetic particles, having large open pores and a high specific surface area for the attachment of micro-organisms that digest contaminants from the fluid, said device further comprising a grid between the conduit and the inlet opening for retaining the particle material in the chamber.

In one embodiment of the device, the grid is a removable grid in the inlet opening.

In one embodiment of the device it further comprises a cone shaped lower part.

The invention further relates to a method for replacing filter material in a device as described above, comprising the steps of:
- Positioning of receiving means for the filter material in the space underneath the inlet opening;
- Making a passage free through the inlet opening for the filter material, including the removal of the conduit from the inlet opening of the chamber, and
- Allowing said filter material to fall out of the inlet opening onto or in the receiving means.

In case the grid is present, the step of making the passage free includes removal from said passage of a grid that would otherwise be present in there.

The various features described in this description and in the claims can be combined in various ways.

The aspects and measures described in this description and claims of the application and/or shown in the drawings of this application, may where possible also be used individually. Said individual aspects may be the subject of divisional patent applications relating thereto. This particularly applies to the measures and aspects described per se in the sub claims.

The invention will be further explained on the basis of a number of exemplary embodiments shown in the attached drawings, in which:
Figure 1 shows a side view of an example of a device wherein a part of the wall has been left out,
Figure 2 shows a schematic drawing of figure 1 showing the control means; and
Figure 3 shows the removal of the filter material.

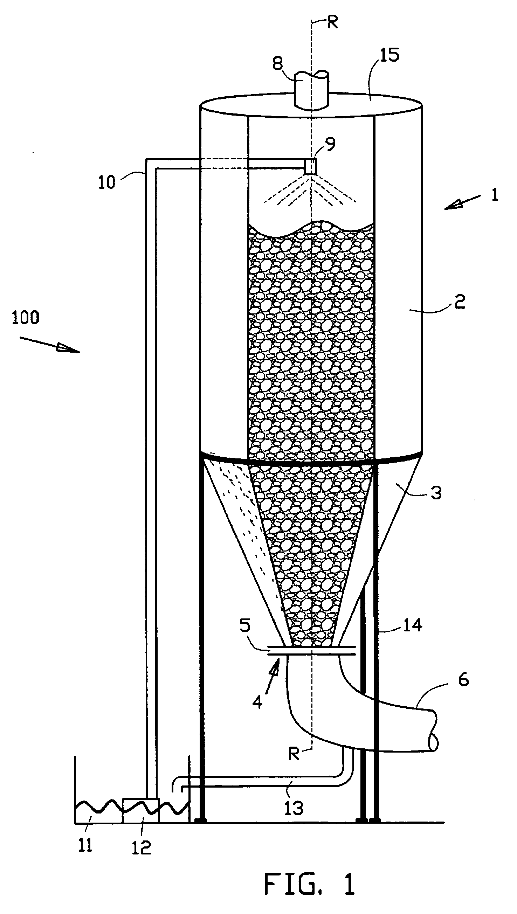

The device 100 in figure 1 comprises a treatment chamber 1 having a straight circle-cylindrical part 2 and a cone-shaped part 3 contiguous thereto. The treatment chamber 1 can for instance be made of synthetic material, stainless steel, glass-fibre reinforced synthetic material. Preferably, the chamber 1 is made of material which is resistant to aggressive acids and biological activity.

In the embodiment shown in figure 1, the device 100 has an air inlet 4 located underneath the treatment chamber 1. Coupled to this inlet are a removable grid 5 and a removable conduit 6 for the fluid, in this case air. The treatment chamber 1 is shown here filled with filter material 7. The filter material 7 is in this case formed by loosely cast synthetic carriers, in this case randomly stacked. In one embodiment the particles/carriers of the filter material in the cone 3, at least in the lower part of the chamber, are larger than the ones above it. Above the filter material 7 there is a sprinkler for water 9, provided with sprinkler nozzles. The treatment chamber 1 furthermore has a lid 15 provided with an outlet 8.

The sprinkler means 9 has a supply conduit 10 and a pump 12 in a water reservoir 11. For discharging water supplied by the sprinkler means 9 and passed through the filter material, the inlet conduit 6 at the lowest point is connected to a discharge conduit or hose 13 which passes back the collected process water to reservoir 11. Prior to returning in reservoir 11 this water can optionally be (pre)treated.

The treatment chamber 1 rests on a support structure or frame 14 that creates a space between the (floor) surface on which the device rests and the lowermost part of the treatment chamber 1, in particular between the inlet 4 and the floor.

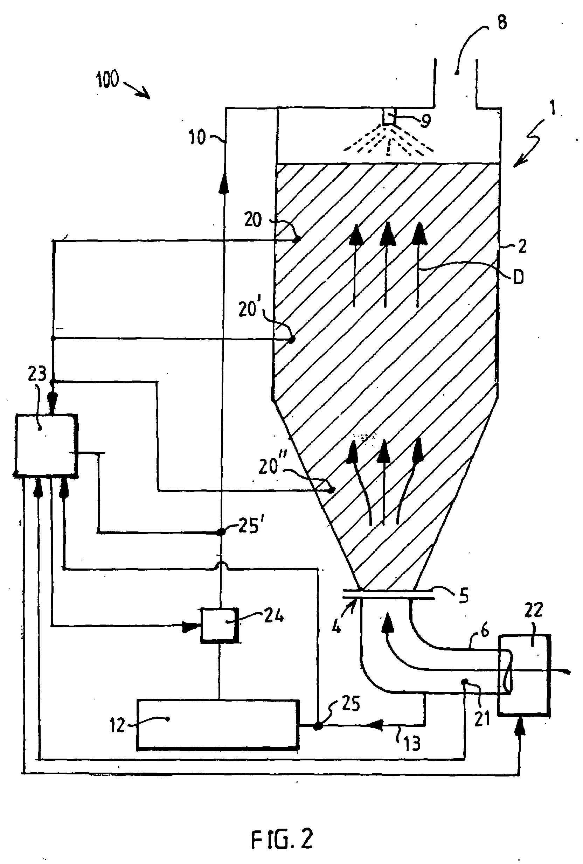

In figure 2 the control means for the device 100 are schematically shown. The flow (direction) of the fluid D is indicated. Inside the treatment chamber 1, temperature sensors/-meters 20, 20' and 20" are placed. If required, in addition to or instead of the shown temperature meters, pH-meter(s), EC- meter(s), and/or other sensors may also be used. The sensors (in this example three) which provide information about the treatment process, are operationally coupled to a computer or control logic 23. The device may also be equipped with a sensor or meter 21 providing information regarding the inflow of the fluid. This sensor 21 can comprise a temperature meter and/or a flow rate meter. This sensor is also operationally coupled to control system 23. The device can furthermore be provided with a sensor or meter 25 providing information regarding the return flow of water. This sensor can be a temperature sensor or flow rate meter.

The device 100 can further comprise a sensor or meter 25' providing information regarding the inflow of water. This sensor can be a temperature sensor or a flow rate meter.

The device can also have a controllable valve or similar means 24 for controlling the amount of water flowing to the sprinkler nozzles 9.

The device can furthermore be provided with means that are not further shown, for influencing the temperature and composition of the inflowing water.

The device can furthermore be provided with a regulator 22 for regulating the amount of water and other conditions, such as temperature, humidity, flow speed/flow rate, etc., of the inflowing fluid via conduit 6.

All said sensors, meters provide measurement signals to the control unit 23, on the basis of which signals the various parts are controlled.

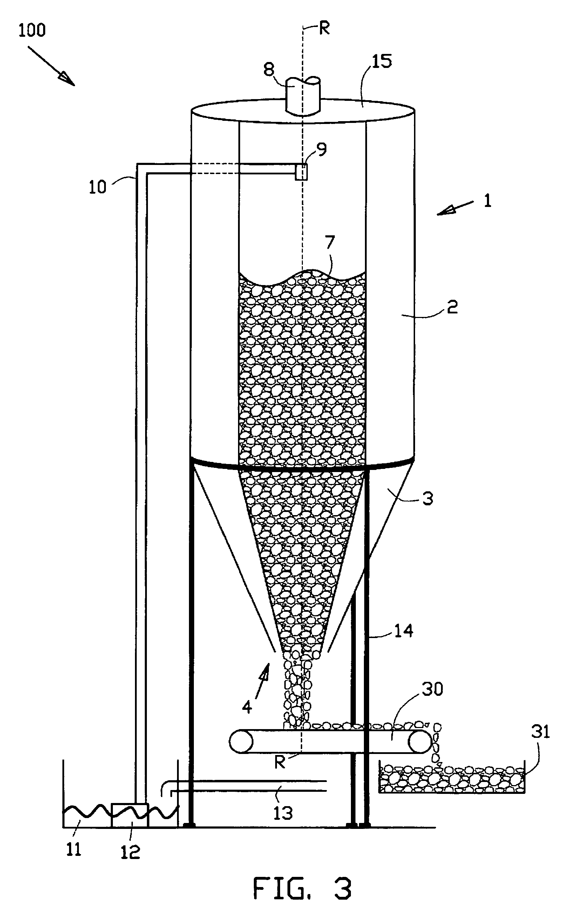

Figure 3 shows a step in the replacement of filter material 7 of a device 100. The conduit 6 is released from inlet 4, and also grid 5 has been removed. Furthermore, conduit 13 has been uncoupled. In this example, a conveyor belt 30 and a container 31 have been placed below the cone 3 and the filter material 7 can fall out of inlet opening 4 onto the conveyor belt 30. After the filter material 7 has flowed out of the chamber and has been discharged by the belt 30 to the container 31, the conveyor 30 and container 31 can be removed again and the grid 5 and the conduits 6 and 13 can be mounted again. The lid 15 can now be opened and new filter material 7 can be let into the chamber 1.

In particular, the chamber 1 can be build using a silo as used at farms for fodder.

The above description is included to illustrate the operation of preferred embodiments of the invention and is not meant to limit the scope of the invention. From the above discussion, many variations that fall within the spirit and scope of the present invention will be apparent to one skilled in the art.

## Claims

1. Device for purifying a flow of fluid, such as air or water, comprising a chamber having an inlet and an outlet for said fluid, wherein the chamber is intended for containing filter material comprising randomly stacked inert particles, such as ceramic or synthetic particles, having a surface suitable for the attachment of micro-organisms able to digest contaminants from the fluid, wherein said chamber has a cylindrical, preferably circle-cylindrical, upper part as well as a cone-shaped lower part contiguous thereto and particularly situated underneath it, in which lower part the inlet or outlet has been arranged.

2. Device according to claim 1, wherein the inlet or outlet is provided in a lower part of the cone-shaped part, preferably in the tip.

3. Device according to claim 2, provided with a grid for supporting or retaining the filter material, preferably disposed in the cone-shaped part, preferably in or near the tip.

4. Device according to claim 3, wherein the grid is can be taken away or removed.

5. Device according to any one of the preceding claims, further comprising a conduit for the fluid, which conduit preferably is removably connected to the inlet or outlet.

6. Device according to any one of the preceding claims, comprising at least one sensor for measuring the activity of said filter material, in particular at least one temperature sensor inside the chamber and/or at least one sensor for determining the flow of water, in particular a flow meter and/or at least one sensor for determining the flow rate of the fluid to be purified.

7. Device according to claim 6, wherein the inlet for the fluid comprises means for influencing the flow of the fluid, further comprising control means, operationally connected to the sensor(s) and to the means for influencing, for controlling the flow of fluid depending on the signals of the sensor(s).

8. Device according to any one of the preceding claims, wherein in operation, the device is positioned with the cylinder axis upright, and the flow direction of the fluid is substantially in the direction of the cylinder axis, wherein preferably the inlet is situated at the bottom of the device.

9. Device according to any one of the preceding claims, comprising sprinkling means for delivering water onto the filter material in the chamber.

10. Device according to claims 8 and 9, wherein the inlet for the fluid and the sprinkling device are positioned such in the device and with regard to one another so as to allow the water and the fluid to flow in counter flow.

11. Method for replacing filter material in a device according to any one of the preceding claims, comprising the steps of:
- positioning receiving means for the filter material in the space underneath the inlet opening;
- making a passage free through the inlet opening for the filter material, including the removal of the conduit from the inlet opening of the chamber, and
- allowing said filter material to fall out of the inlet opening onto or in the receiving means.

12. Method according to claim 11, wherein the step of making the passage free comprises the removal from said passage of a grid that would otherwise be present in there.
